(19)

**Europäisches Patentamt**
**European Patent Office**
**Office européen des brevets**

(11) **EP 1 157 268 B1**

(12) **EUROPEAN PATENT SPECIFICATION**

(45) Date of publication and mention of the grant of the patent:
**21.11.2007 Bulletin 2007/47**

(51) Int Cl.:
***G01N 21/64*** (2006.01)

(21) Application number: **00910357.3**

(22) Date of filing: **25.02.2000**

(86) International application number:
**PCT/US2000/004927**

(87) International publication number:
**WO 2000/050878 (31.08.2000 Gazette 2000/35)**

(54) **IMAGING SYSTEM FOR AN OPTICAL SCANNER**

ABBILDUNGSSYSTEM FÜR OPTISCHEN BILDABTASTER

SYSTEME D'IMAGERIE POUR UN SCANNER

(84) Designated Contracting States:
**AT BE CH CY DE DK ES FI FR GB GR IE IT LI LU MC NL PT SE**

(30) Priority: **26.02.1999 US 258484**
**19.07.1999 US 356428**

(43) Date of publication of application:
**28.11.2001 Bulletin 2001/48**

(73) Proprietor: **PerkinElmer Life Sciences, Inc.**
**Boston, MA 02118 (US)**

(72) Inventors:
• **OSGOOD, Avery**
**Bellingham, MA 02019 (US)**
• **SCHERMER, Mack**
**Belmont, MA 02478 (US)**

(74) Representative: **Rupprecht, Kay et al**
**Meissner, Bolte & Partner GbR**
**Postfach 86 06 24**
**81633 München (DE)**

(56) References cited:
**DE-A- 3 821 422       DE-A- 4 343 076**
**DE-A- 19 842 153      US-A- 4 122 348**
**US-A- 5 022 757       US-A- 5 329 461**
**US-A- 5 399 866**

• **PATENT ABSTRACTS OF JAPAN vol. 1998, no. 09, 31 July 1998 (1998-07-31) & JP 10 096862 A (BUNSHI BIO PHOTONICS KENKYUSHO:KK), 14 April 1998 (1998-04-14)**

## Description

FIELD OF THE INVENTION

This invention in general relates to optical scanning systems and, in particular, to scanning systems such as fluorescent micro-array readers, DNA micro-array readers, or "bio-chip" readers, in which excitation radiation of various wavelengths are used to produce fluorescence in a scanned sample.

DESCRIPTION OF THE PRIOR ART

The document JP 10 096862 A discloses a fluorescence microscope which is adapted for sensitively detecting fluorescence light emitted by a sample.

The document US 5,399,866 A discloses an imaging system responsive to focused laser light. The conventional imaging system includes a focusing lens for focusing the laser light and a mirror having a reflective side, a non-reflective side, and a hole for passing a predetermined portion of the laser light from the focusing lens through the non-reflective side. A fibre probe excites and couples fluorescence from an analyte. The fibre probe has a fibre front face for receiving laser light through the hole and for directing the fluorescence to the reflective side of the mirror. Optical devices for imaging the portion of the fluorescence reflected by the mirror to form an image of the fibre front face are provided, as well as an optical stop having an aperture in the image plane of the imaging means for reducing undesired light from the imaging means before reaching a detector. The mirror is angled for directing substantially all fluorescence from the fibre probe into the imaging means rather than back toward the fibre probe.

The document EP 1 031 055 A (published 23 march 2000) discloses an optical system in the ray path of a confocal fluorescence microscope, comprising at least one laser light source, a device positioned in the illuminating/detecting beam for separating the exciting light from the fluorescent light, an objective arranged between the device and the object, and a detector positioned downstream of the device situated in the detecting beam.

The document DE 43 43 076 A1 discloses a device for photothermically testing a surface of a moving test specimen. An excitation beam passes through an aperture in a collecting lens that reproduces the thermal radiation generated in a measuring area, so that the collecting lens may be adapted to a wavelength of the excitation beam passed to a detector. A coupling mirror mounted in the path of excitation beam has practically total reflectivity for the wavelength of the excitation beam and is arranged in such a way that it is very small near the focal area of the excitation beam, so that together with the aperture of the collecting lens it only masks a small part of the thermal radiation passed to the detector. In another embodiment, the excitation beam falls directly on the surface through an aperture in the decoupling mirror that deflects the thermal radiation, whereas the thermal radiation can be passed with practically all is intensity to the detector through the decoupling mirror with appropriate reflectivity.

The use of excitation radiation to produce fluorescence in a scanned sample is known. U. S. Patent No. 5.381.224 issued to Dixon et al. discloses scanning optical imaging systems for macroscopic specimens, the system allowing both confocal and non-confocal imaging to be performed in reflected light. Fluorescent imagers are used to acquire data in experiments that utilize fluorescent labels to identify the state of a sample being tested. In some cases the presence of or lack of fluors in the sample determines the experimental result. In other cases the density of the fluors, a function of the intensity of the radiation emitted from the sample, is the measurement of interest and the experimental result can be inferred by measuring the intensity of the detected radiation.

An example of a process that uses fluorescent labels is the micro-array. A micro-array is a set of experiments involving DNA (or RNA) bound to a glass substrate. Reference or "target" DNA is spotted onto a glass substrate-typically a 2.54 cm by 7.62 cm (one-by three-inch) glass microscope slide-where it chemically binds to the surface. Each spot, or sample, of DNA constitutes a separate experiment. "Probe" DNA or RNA which has been labeled with a fluorophor is then introduced to the surface of the slide and is allowed to hybridize with the target DNA. Excess probe DNA that does not bind with target DNA is removed from the surface of the slide in a subsequent washing process.

The experiment allows the binding affinity between the probe and target DNA to be measured to determine the likeness of their molecular structures; complementary molecules have a much greater probability of binding than unrelated molecules. The probe DNA is labeled with fluorescent labels that emit a range of radiation energy centered about and including a wavelength $\lambda_{emission}$ when excited by an external radiation source of a shorter wavelength $\lambda_{excitation}$. The brightness of emitted radiation is a function of the fluor density in the illuminated sample. Because the fluor density is a function of the binding affinity or likeness of the probe molecule to the target molecule, the brightness of each sample can be mapped as to the degree of similarity between the probe DNA and the target DNA present. On a typical microarray up to tens of thousands of experiments can be performed simultaneously on the probe DNA, allowing for a detailed characterization of complex molecules.

A scanning fluorescent imager divides the area of interest into a set of discrete image elements referred to as pixels. Each pixel is independently addressed and measured for the presence of fluors. The fluors are excited by an incident excitation beam and a portion of the resulting emitted fluorescence radiation is collected and measured by detection apparatus. Each measurement results in a data point that represents the relative fluor density of the measured pixel. The pixel data is then reconstructed to create a quantified representation of the area scanned.

In a scanning microscope, each pixel is illuminated independently while it is being addressed. The light source is typically a single-wavelength laser device focused down to form a spot of the desired size. Radiation is emitted by the fluors in an outward, hemispherical transmission pattern. A portion of this emitted radiation is collected by beam collection optics and directed to the detection apparatus. Additional radiation collected is radiation from the incident excitation beam which is reflected or scattered by the surface of the sample. The imager optics must discriminate between the two radiation wavelengths by rejecting the excitation radiation and passing the fluorescent radiation. Optical filtering components, such as dichroic and bandpass filters, provide the discrimination in conventional systems.

Laser fluorescence micro-array scanners incorporate the ability to deliver multiple laser excitation wavelengths so that fluorescence data can be obtained from the sample at two or more emission wavelengths by detecting two or more fluorescent dyes. Such a unique excitation and emission wavelength pair is typically referred to as a "Channel". Many DNA micro-array scanners utilize a two-wavelength scanning method, where the results of one wavelength scan are used as control values and the results of the other wavelength scan represent the desired experimental result, as in Differential Gene Expression. As the market and application mature, and a larger variety of suitable dyes become available, the demand for alternative excitation wavelengths and emission bands will increase.

Most scanning confocal microscopes employ a dichroic or multichroic beam splitter for color separation between the excitation radiation wavelength $\lambda_{excitation}$ and the emission radiation wavelength $\lambda_{emission}$. U.S. Patent No. 5,672,880 issued to Kain, for example, discloses a fluorescence imaging system in which fluorescent light emitted by a sample is collected by an objective and passed through a dichroic filter placed along the optical axis between a laser and the objective to direct the fluorescent light onto a photo-detector. Dichroic beam splitters are fabricated using a vacuum deposition process in which inorganic crystalline materials having varying indices of optical refraction are deposited in layers onto optical substrates to create optical filters with specific band-pass and/or band-reject characteristics.

In practice, an optical scanning system may operate utilizing five or more single-wavelength radiation devices producing ten or more unique, but variable, emission bands. These operating parameters impose a specification requirement that the component multichroic optical element be designed so as to reflect all five wavelengths and pass the emission wavelengths. A first drawback to this approach is that such a specification may be quite difficult to achieve in practice. Moreover, future improvements and developments in optical scanning systems may necessitate that the systems operate with even more excitation and emission wavelengths, requiring a multichroic beam splitter having even more demanding specification requirements.

Another drawback of conventional optical scanning systems is the design complexity incurred by the use of single-wavelength radiation devices. By utilizing one or more multi-wavelength radiation devices, with an appropriate wavelength selection device, a more compact, robust optical scanning system can be achieved.

## SUMMARY OF THE INVENTION

The present invention discloses an imaging system comprising a radiation device providing excitation radiation of different wavelengths, a lens for imaging one or more of the excitation radiation sources onto a sample surface to produce fluorescent emission, and a mirror, configured as a geometric beam splitter, disposed in the transmission path of the emission radiation and excitation radiation subsequent to reflection from the sample and collimation by the lens, the mirror reflecting the collimated emission radiation such that the emission radiation is directed to a detector and the excitation radiation is directed away from the detector. Other features of the invention will be readily apparent when the following detailed description is read in connection with the drawings.

## BRIEF DESCRIPTION OF THE DRAWINGS

The structure and operation of the invention, together with other objects and advantages thereof, may best be understood by reading the detailed description to follow in connection with the accompanying drawings, of which:

Fig. 1 is a diagrammatic illustration of an imaging system comprising an excitation radiation device, an objective lens, and a mirror utilized for reflecting excitation radiation to and from the sample and away from the detector;

Fig. 2 is a cross-sectional diagram of the objective lens and mirror of Fig. 1, showing the relationship between emission beam width, excitation beam width, and the size of the mirror, and

Fig. 3 is a diagrammatic illustration of an embodiment of an imaging system according to the present invention, comprising a mirror having a centrally-located opening, the mirror utilized for reflecting radiation emitted from a sample to a detector.

## DETAILED DESCRIPTION OF ILLUSTRATIVE EMBODIMENTS

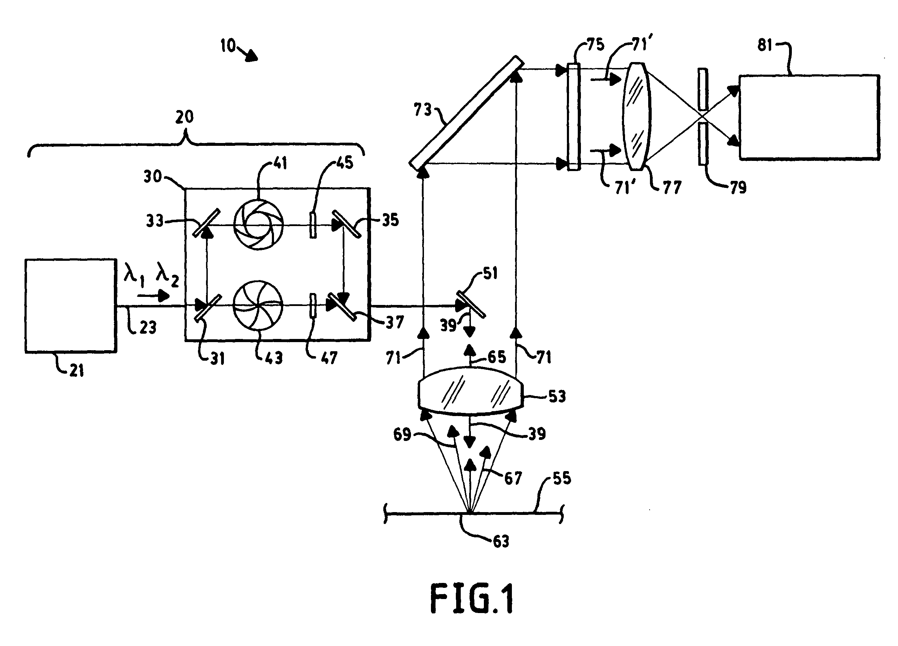

There is shown in Fig. 1 a diagrammatical representation of an imaging system 10, as can be utilized in the analysis of a sample 55. Imaging system 10 includes an illumination head 20 comprising a shutter assembly 30 and an excitation radiation device 21. The excitation radiation device 21 may be two or more monochromatic optical sources (e.g., single-wavelength laser devices), a dual-wavelength laser device, a broadband radiation device, or a multi-wavelength laser device such as exemplified by the Spectra-Physics Model 161C laser which provides output radiation at 514 nm, 488 nm, and 458 nm. The excitation radiation device 21 provides radiation comprising two wavelengths $\lambda_1$ and $\lambda_2$, such as 514 nm and 488 nm, to the shutter assembly 30 via an optical fiber cable 23. The shutter assembly 30 selects one of the excitation wavelengths at a time for illumination of the sample 55. For purpose of illustration, radiation of wavelength $\lambda_1$ has been selected for output from the shutter assembly 30. The illumination provided to the sample 55 can be selected by powering only the radiation source desired. Alternatively, all radiation sources can be left in a powered state and one or more shutters (not shown) can be moved into or out of the transmission paths of the excitation beam so as to admit radiation of the desired wavelength and to block other wavelengths.

The shutter assembly 30 comprises a first beam splitter 31 which is highly reflective to radiation of wavelength $\lambda_1$ and highly transmissive to radiation of wavelength $\lambda_2$. Radiation of wavelength $\lambda_1$ is reflected from the first beam splitter 31 to follow a first transmission path through a first shutter 41, and radiation of wavelength $\lambda_2$ is transmitted through the first beam splitter 31 to follow a second transmission path through a second shutter 43. Radiation of wavelength $\lambda_1$, following the first transmission path, is reflected again at a first mirror 33, which is highly reflective to $\lambda_1$ radiation. The $\lambda_1$ radiation reflected from the first mirror 33 passes through the first shutter 41, here shown as open, passes through a first narrow pass filter 45, reflects from a second mirror 35, and reflects from a second beam splitter 37. The second beam splitter 37 is highly reflective to $\lambda_1$ radiation and is highly transmissive to $\lambda_2$ radiation. After reflection from the second beam splitter 37, the $\lambda_1$ radiation is output from the shutter assembly 30 as excitation radiation 39.

Radiation of wavelength $\lambda_2$ is transmitted along the second transmission path through the first beam splitter 31 to the second shutter 43, here shown as closed. When the second shutter 43 is open, $\lambda_2$ radiation passes through a second narrow pass filter 47 and through the second beam splitter 37. When the first shutter 41 is closed, $\lambda_2$ radiation is output (not shown) from the shutter assembly 30 as the excitation radiation 39.

The excitation radiation 39 is emitted from the shutter assembly 30 and reflected to the surface of the sample 55 by an excitation mirror 51. An objective lens 53 is positioned between the excitation mirror 51 and the surface of sample 55 so as to focus the excitation beam 39 to a desired spot size 63 on the surface of the sample 55. The effective focal length of the objective lens 53 is approximately 6 millimeters. This provides a spot size of about 5 $\mu$m from an excitation radiation beam 0.6 millimeter in diameter.

When projected onto the surface of the sample 55, the excitation radiation 39 produces three types of radiation which emanate from the surface of the sample 55. The first type of radiation, a specular reflection beam 65 having wavelength of $\lambda_1$, results from the reflection of a portion of the incident excitation radiation 39 along a path normal to the surface of the sample 55 (i.e., back along the incident path of transmission). The second type of radiation, a diffuse reflection 67, also of wavelength $\lambda_1$, is that portion of the excitation radiation 39 reflected from the surface of the sample 55 in an other than normal direction. The reflection path of the diffuse reflection 67 is not confined to the diameter of the incident path of transmission of the excitation radiation 39 because the diffuse reflection 67 is substantially scattered by the surface.

The third type of radiation, an emission radiation 69, is produced by the illumination of fluors in the sample 55 in response to the incident excitation radiation 39. As is well known in the relevant art, such fluors emit when excited by radiation of the proper wavelength. Thus, when illuminated by radiation of wavelength $\lambda_1$ the fluors in the sample 55 produce radiation of wavelength $\lambda_{emit1}$, typically 20 to 40 nm longer than the wavelength $\lambda_1$ of the excitation radiation 39. By way of comparison, the energy of the excitation radiation 39 at the surface of sample 55 is on the order of I mW, and the energy of the emission radiation 69 is on the order of $10^{-11}$ watts. As can be appreciated by one skilled in the relative art, the signal-to-noise ratio of the emitted power to the excitation power decreases as the size of the specular reflection beam 65 increases and as the amount of the diffuse reflection 67 emanating from the surface of sample 55 increases.

The specular reflection beam 65 and those portions of the diffuse reflection 67 and the emission radiation 69 incident on the sample side of the objective lens 53 are collimated into a composite emission beam 71 comprising radiation of wavelengths $\lambda_1$ and $\lambda_{emit1}$. The numerical aperture (NA) of the objective lens 53 is at least 0.5, and is made as large as practical so as to intercept the greatest portion of the emission radiation 69, thus to improve the accuracy of the detection process, as explained in greater detail below. In a preferred embodiment, the objective lens 53 has a numerical aperture of about 0.75.

The composite emission beam 71 is transmitted to a detector 81. An optional broadband mirror 73 may be used to provide a folded transmission path by reflection of the incident composite emission beam 71. By utilizing the broadband mirror 73, the cross-sectional profile of the imaging system 10 can be advantageously reduced. The detector 81 is preferably a photo-multiplier tube, but an avalanche photodiode or a solid state optical detection device can be used in the alternative. The photo-multiplier tube is preferable because of its high sensitivity and adjustable gain. Moreover, the output of the photo-multiplier tube comprises a current that is proportional to the detected radiation power. This current signal can be filtered and then converted to a digital value using an analog-to-digital converter.

A detector filter 75, substantially transmissive to the emission radiation 69 and substantially non-transmissive to the excitation radiation 39, may be disposed in the transmission path of the composite emission beam 71 between the objective lens 53 and the detector 81. The detector filter 75 may comprise either a band pass filter or a long pass filter. The detector filter 75 serves to attenuate most or all of the diffuse reflection 67 such that a filtered emission beam 71', comprising primarily the emission radiation 69 of wavelength $\lambda_{emit1}$, is transmitted to the detector 81. In an alternative arrangement, a focusing lens 77 and an aperture stop 79 may be positioned in the transmission path of filtered emission beam 71' as shown. When used in the imaging system 10, the focusing lens 77 forms a confocal system with the objective lens 53 and images the filtered emission beam 71' onto the detector 81. As can be appreciated by one skilled in the relevant art, there may be provided additional band pass or long pass filters for each excitation and emission wavelength pair utilized in the imaging system 10.

The disclosed arrangements utilize geometric beam splitting and thereby demonstrate an advantage over conventional dichroic and multichroic beam splitting methods and apparatuses. Where dichroics comprise a glass element designed to reflect particular wavelengths and to transmit others, a geometric beam splitter as utilized in the imaging system 10 disclosed comprises the excitation mirror 51. The excitation mirror 51 is designed to reflect the excitation radiation 39 to the surface of the sample 55 and to reflect the specular reflection beam 65 from the surface of the sample 55, and is physically sized to allow the detector 81 to receive the maximum amount of the emission radiation 69. The excitation mirror 51 has a major dimension larger than the width of the excitation beam 39 and is placed about 45° with respect to the transmission path of the excitation beam 39. The excitation mirror 51 can be supported on a spherical mount (not shown), for example, so as to allow for several degrees of adjustment during alignment of the imaging system 10. When properly aligned, the excitation mirror 51 will intercept and redirect substantially all the specular reflection 65 to the shutter assembly 30 and away from the detector 81, thus improving the system signal-to-noise ratio.

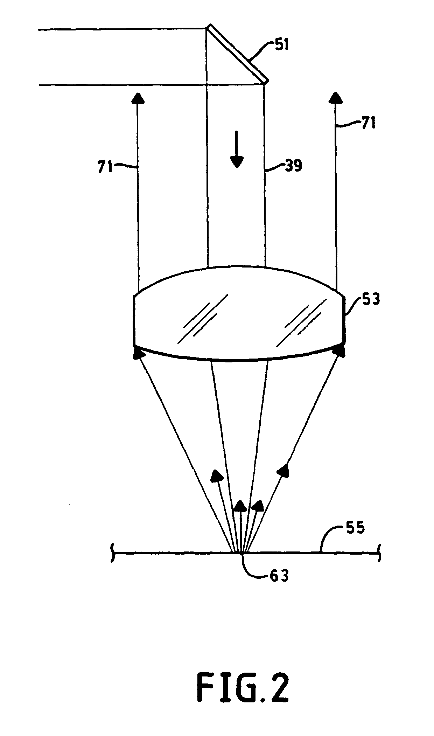

The relationship of the numerical aperture of the objective lens 53 to a geometric emission transmission factor (GETF) can be best explained with reference to Fig. 2. GETF is defined as the ratio of: i) the blockage of the composite emission beam 71 resulting from placement of the mirror 51 (and associated mounting components) in the transmission path, and ii) the overall path diameter of the composite emission beam 71. It can be shown, with the following two examples, that a higher numerical aperture will improve the GETF of a particular imaging system.

In the first example, we specify a spot size 63 of approximately 5 $\mu$m on the surface of the sample 55 with the excitation radiation 39 having a beam diameter of 0.6 millimeter. This can be achieved if the objective lens 53 has an effective focal length of about 6 millimeters. For an NA of 0.75, the aperture diameter is about 13.6 millimeters to give an aperture area of about 145.26 mm$^2$. If the excitation mirror 51 and any associated mounting (not shown) have a diameter of 3.17 mm and are set at a 45° angle with respect to the transmission path of the composite emission beam 71, the cross-sectional area of blockage is about 5.57 mm$^2$. With this configuration, the GETF is found to be:

$$GETF = \frac{145.26\ mm^2}{5.57\ mm^2} = 26.07$$

In the second example, the objective lens 53 has an effective focal length of 10 millimeters and an NA of 0.30. The aperture diameter is about 6.2 millimeter to give an aperture area of about 30.19 mm$^2$. To produce a 5 $\mu$m excitation spot, the input excitation radiation 39 should comprise a beam of about 1.0 millimeter in diameter. If the excitation mirror 51 has a diameter of 2.0 millimeter, the excitation radiation 39 will be completely intercepted, even allowing for some tolerance in position. If the excitation mirror 51 is set at a 45° angle with respect to the transmission path, the area of blockage is about 2.22 mm$^2$. With this configuration, the GETF is found to be:

$$GETF = \frac{30.19\ mm^2}{2.22\ mm^2} = 13.06$$

That is, the GETF is reduced by a factor of two in the second configuration, demonstrating that the GETF is a function of both lens NA and effective focal length. The excitation spot size is related to the effective focal length and the emission aperture is related to the NA.

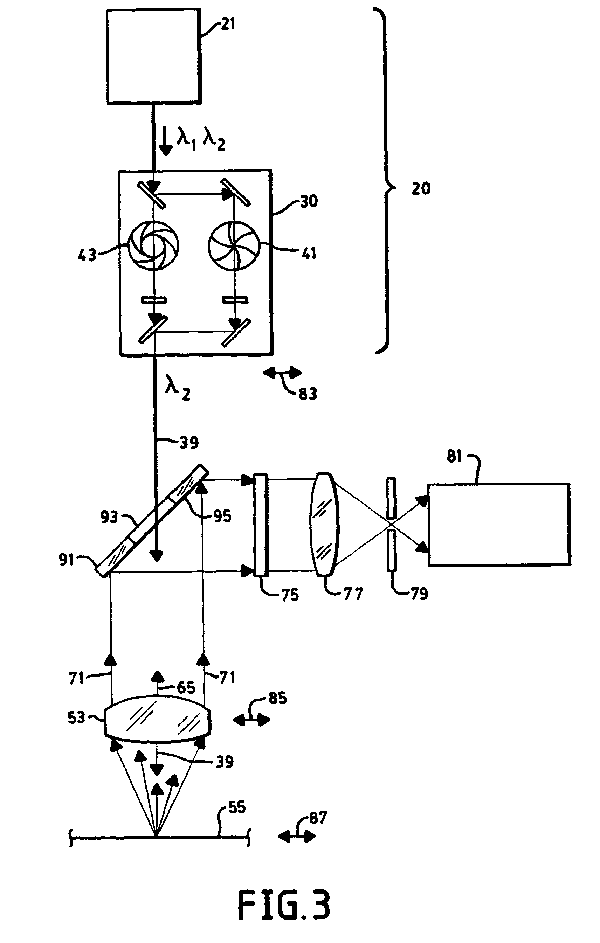

In an embodiment according to the present invention, shown in Fig. 3, the excitation radiation 39 is transmitted by the illumination head 20 to the surface of the sample 55 through a centrally-located opening 93 in an annular mirror 91. In the example provided, the excitation device 21 produces a radiation output having wavelengths $\lambda_1$ and $\lambda_2$. The excitation radiation 39 has a wavelength of $\lambda_2$ as the first shutter 41 is closed and the second shutter 43 is open. Accordingly, the fluors of interest in the sample 55 produce an emission radiation 69 having a wavelength of $\lambda_{emit2}$. The opening 93 is positioned in the transmission paths of both the excitation radiation 39 and the specular reflection beam 65. The annular mirror 91 has a reflection surface 95 substantially reflective to radiation of wavelength $\lambda_{emit2}$. A portion of the composite emission beam 71 is reflected to the detector 81 by the annular mirror 91. Preferably, the width of the opening 93 is smaller than the width of the composite emission beam 71, and at least as large as the diameter of the specular reflection beam 65. The opening 93 provides for most or all of the specular reflection beam 65 to pass back to the shutter assembly 30 rather than being transmitted to the detector 81.

In the present invention, the incident excitation radiation 39 is scanned across the surface of the sample 55 by any of three methods. In the first method, the shutter assembly 30 is moved within the imaging system 10, as indicated by arrow 83. In the second method, the objective lens 53 is translated with respect to the surface of the sample 55, as indicated by arrow 85. In the third method, the sample 55 is laterally translated with respect to the imaging system 10, as indicated by arrow 87.

While the invention has been described with reference to a particular embodiment, it will be understood that the present invention is by no means limited to the particular constructions and methods herein disclosed and/or shown in the drawings, but also comprises any modifications or equivalents within the scope of the claims.

**Claims**

1. An imaging system (10), suitable for use in optically scanning a sample (55), said imaging system (10) including:

   A) one or more radiation sources (21) providing radiation at at least two different wavelengths $\lambda_i$ and means (30) for selecting one of said wavelength $\lambda_i$ for transmission as an excitation beam (39) towards the sample (55);
   B) an objective lens (53) disposed between the radiation sources (21) and the sample (55) such that said excitation beam (39) of wavelength $\lambda_i$ passes through the objective lens (53) and illuminates the sample (55), whereby a portion of the excitation beam of wavelength $\lambda_i$ incident upon the sample (55) is converted into and subsequently emitted as emission radiation (69) of wavelength $\lambda_i$' and a portion (65) of the excitation beam is specularly reflected by the sample (55), the objective lens (53) being further disposed to substantially collimate the specularly reflected light (65) and those portions of the emission radiation (69) incident on the sample side of the objective lens (53), thereby forming a composite emission beam (71);
   C) a detector (81) responsive to radiation of wavelength $\lambda_i$'; and
   D) a mirror (91) configured as a geometric beam splitter disposed in the transmission path of the excitation beam (39) between the radiation sources (21) and the objective lens (53), the mirror (91) comprises a major dimension at least as large as the width of said composite emission beam (71) and includes an enclosed opening (93) in the transmission path of said composite emission beam (71), the width of the opening (93) being smaller than the width of said composite emission beam (71) and at least as large as the diameter of the collimated specularly reflected light (65), thereby allowing the excitation beam (39) and the collimated specularly reflected light (65) to pass through the opening (93) and reflecting at least a portion of the emission radiation (69) in a direction toward the detector (81).

2. The imaging system of claim 1, wherein said radiation sources (21) comprise laser devices.

3. The imaging system of claim 2, wherein said objective lens (53) comprises a numerical aperture of at least 0.5.

4. The imaging system of any of the claims 1 to 3, wherein said detector (81) produces an electrical signal in response to incident radiation of wavelength $\lambda_i$'.

5. The imaging system of any of the claims 1 to 4, further comprising means for scanning said excitation beam (39) of wavelength $\lambda_i$ across the sample (55).

6. The imaging system of claim 5, wherein said means for scanning comprises means for selectively directing the excitation beams (39) produced by said radiation sources (21) within said imaging system (10) by moving a shutter assembly (30).

7. The imaging system of claim 5, wherein said means for scanning comprises means for translating said objective lens (53) relative to the sample (55).

8. The imaging system of claim 5, wherein said means for scanning comprises means for translating the sample (55) relative to said imaging system (10).

9. The imaging system of any of the claims 1 to 5, further comprising means (30) for selectively blocking said excitation beams (39), such that only one excitation wavelength $\lambda_i$ (39) illuminates the sample at a given time.

10. The imaging system of claim 9, wherein said means (30) for selectively blocking includes a shutter (41, 43).

11. The imaging system of any of the claims 1 to 10, further comprising a filter (75) disposed in the transmission path of said emission beam (71), said filter (75) substantially transmissive to radiation of wavelength $\lambda_i$' and substantially non-transmissive to radiation of wavelength $\lambda_i$.

12. The imaging system of any of the claims 1 to 11, wherein said detector (81) comprises at least one member of the group consisting of a photomultiplier tube, an avalanche photodiode, and a solid state optical detector.

13. The imaging system of claim 1, wherein the one or more radiation sources (21) include one or more laser devices, said laser devices providing excitation beams (39) comprising radiation of wavelength $\lambda_1$, $\lambda_2$, $\lambda_3$, $\lambda_4$...$\lambda_i$ respectively; and wherein the system further includes a means (30) for selecting any of said excitation beams (39) so as to provide radiation having a wavelength of $\lambda_i$, $1 \le j \le i$.

14. The imaging system of claim 13, wherein said objective lens (53) comprises a focal length of approximately 6 millimeters.

15. The imaging system of claim 13, wherein said objective lens (53) comprises a numerical aperture of approximately 0,75.

16. The imaging system of any of the claims 13 to 15, further comprising a filter (75) disposed in the transmission path of said emission beam (71), said filter (75) substantially transmissive to radiation of wavelength $\lambda_1$' and substantially non-transmissive to radiation of wavelength $\lambda_1$.

17. A method for optically scanning a sample (55) containing a fluorophore substance, said method comprising the steps of:

- providing one or more radiation sources (21) suitable for emitting radiation at at least two different wavelengths $\lambda_i$;
- selecting one of said wavelengths and focusing the corresponding radiation as excitation beam (39) of wavelength $\lambda_i$ onto the sample (55) by means of an objective lens (53) such that at least a portion of said excitation beam is converted into radiation of wavelength $\lambda_i$', said converted radiation being emitted from the sample (55) as emission radiation (69) of wavelength $\lambda_i$', and a portion of said excitation beam is emitted from the sample (55) as specularly reflected radiation (65);
- collecting at least a portion of said emission radiation (69) of wavelength $\lambda_i$' and said specularly (65) reflected radiation of wavelength $\lambda_i$;
- collimating said collected radiation by said objective lens (53) to form a composite emission beam (71) and transmitting said composite emission beam (71) along a transmission path to a mirror (91) positioned between said radiation source (21) and said objective lens (53) and configured as a geometric beam splitter, said mirror (91) being disposed at an angle to the transmission path of said composite emission beam (71); and
- transmitting at least a portion of said emission radiation (69) included in said composite emission beam (71) to a detector (81),

wherein

said portion of said emission radiation (69) is reflected from said mirror (91) in a direction toward the detector (81), said specularly reflected radiation (65) included in said composite emission beam (71) passes in a direction away from said detector (81) through an opening (93) in the mirror (91), said opening (93) being smaller than the width of the composite emission beam (71) and at least as large as the diameter of the collimated specularly reflected light (65), and said excitation beam (39) passes through said opening (93).

**Patentansprüche**

1. Abbildungssystem (10), welches zur Verwendung bei einem optischen Abtasten von einer Probe (55) geeignet ist, wobei das Abbildungssystem (10) enthält:

A) eine oder mehrere Strahlungsquellen (21), welche eine Strahlung bei zumindest zwei unterschiedlichen Wellenlängen $\lambda_i$ bereitstellen, und ein Mittel (30) zum Auswählen von einer der Wellenlängen $\lambda_i$ zur Übertragung als ein Anregungsstrahl (39) an die Probe (55);
B) eine Objektivlinse (53), welche zwischen den Strahlungsquellen (21) und der Probe (55) angeordnet ist, so dass der Anregungsstrahl (39) der Wellenlängen $\lambda_i$ durch die Objektivlinse (53) passiert und die Probe (55) bestrahlt, wobei ein Abschnitt des Anregungsstrahls der Wellenlänge $\lambda_i$, welcher auf die Probe (55) einfällt, in eine Emissionsstrahlung (69) der Wellenlänge $\lambda_i$' umgewandelt und nachfolgend als diese emittiert wird, und ein Abschnitt (65) des Anregungsstrahls spiegelnd durch die Probe (55) reflektiert wird, wobei die Objektivlinse (53) ferner derart angeordnet ist, dass sie das spiegelnd reflektierte Licht (65) und jene Abschnitte der Emissionsstrahlung (69), welche auf die Proben-Seite von der Objektivlinse (53) einfällt, im wesentlichen parallel richtet, wodurch ein zusammengesetzter Emissionsstrahl (71) ausgebildet wird;

C) einen Erfasser (81), welcher auf eine Strahlung der Wellenlänge $\lambda_i'$ anspricht; und

D) einen Spiegel (91), welcher als ein geometrischer Strahlteiler konfiguriert ist, welcher im Übertragungspfad des Anregungsstrahls (39) zwischen den Strahlungsquellen (21) und der Objektivlinse (53) angeordnet ist,

wobei der Spiegel (91) eine Hauptdimension enthält, welche zumindest so groß ist wie die Breite des zusammengesetzten Emissionsstrahls (71), und eine eingeschlossene Öffnung (93) im Übertragungspfad des zusammengesetzten Emissionsstrahls (71) enthält, wobei die Breite von der Öffnung (93) kleiner als die Breite des zusammengesetzten Emissionsstrahls (71) und zumindest so groß wie der Durchmesser des parallel gerichteten, spiegelnd reflektierten Lichts (65) ist, wodurch es ermöglicht wird, dass der Anregungsstrahl (39) und das parallel gerichtete, spiegelnd reflektierte Licht (65) durch die Öffnung (93) passieren und zumindest einen Abschnitt der Emissionsstrahlung (69) in eine Richtung zum Erfasser (81) reflektieren.

2. Abbildungssystem nach Anspruch 1, bei welchem die Strahlungsquellen (21) Laservorrichtungen enthalten.

3. Abbildungssystem nach Anspruch 2, bei welchem die Objektivlinse (53) eine numerische Apertur von zumindest 0,5 enthält.

4. Abbildungssystem nach einem der Ansprüche 1 bis 3, bei welchem der Erfasser (81) ein elektrisches Signal in Ansprechen auf eine einfallende Strahlung der Wellenlänge $\lambda_i'$ erzeugt.

5. Abbildungssystem nach einem der Ansprüche 1 bis 4, welches ferner ein Mittel zum Abtasten des Anregungsstrahls (39) der Wellenlänge $\lambda_i$ über die Probe (55) hinweg enthält.

6. Abbildungssystem nach Anspruch 5, bei welchem das Mittel zum Abtasten ein Mittel zum selektiven Richten des Anregungsstrahls (39), welcher durch die Strahlungsquellen (21) erzeugt wird, innerhalb des Abbildungssystems (10) durch ein Bewegen von einer Verschlussanordnung (30) enthält.

7. Abbildungssystem nach Anspruch 5, bei welchem das Mittel zum Abtasten ein Mittel zum Versetzen der Objektivlinse (53) in Relation zur Probe (55) enthält.

8. Abbildungssystem nach Anspruch 5, bei welchem das Mittel zum Abtasten ein Mittel zum Versetzen der Probe (55) in Relation zum Abbildungssystem (10) enthält.

9. Abbildungssystem nach einem der Ansprüche 1 bis 5, welches ferner ein Mittel (30) zum selektiven Blockieren des Anregungsstrahls (39) enthält, so dass lediglich eine Anregungs-Wellenlänge $\lambda_i$ (39) die Probe zu einer vorgegebenen Zeit bestrahlt.

10. Abbildungssystem nach Anspruch 9, bei welchem das Mittel (30) zum selektiven Blockieren einen Verschluss (41, 43) enthält.

11. Abbildungssystem nach einem der Ansprüche 1 bis 10, welches ferner einen Filter (75) enthält, welcher im Übertragungspfad von dem Emissionsstrahl (71) angeordnet ist, wobei der Filter (75) im wesentlichen bei einer Strahlung der Wellenlänge $\lambda_i'$ durchlässig ist und im Wesentlichen bei einer Strahlung der Wellenlänge $\lambda_i$ undurchlässig ist.

12. Abbildungssystem nach einem der Ansprüche 1 bis 11, bei welchem der Erfasser (81) zumindest ein Teil von der Gruppe enthält, welche eine Fotovervielfacher-Röhre, eine Lawinen-Fotodiode und einen Festkörper-Optikerfasser enthält.

13. Abbildungssystem nach Anspruch 1, bei welchem die eine oder die mehreren Strahlungsquellen (21) eine oder mehrere Laservorrichtungen enthalten, wobei die Laservorrichtungen Anregungsstrahlen (39) bereitstellen, welche jeweils eine Strahlung der Wellenlänge $\lambda_1, \lambda_2, \lambda_3, \lambda_4 \ldots \lambda_i$ enthalten, und wobei das System ferner ein Mittel (30) zum Auswählen eines der Anregungsstrahlen (39) enthält, um somit eine Strahlung bereitzustellen, welche eine Wellenlänge von $\lambda_i$ $1 \leq j \leq i$ hat.

14. Abbildungssystem nach Anspruch 13, bei welchem die Objektivlinse (53) eine Brennweite von ungefähr 6mm enthält.

15. Abbildungssystem nach Anspruch 13, bei welchem die Objektivlinse (53) eine numerische Apertur von ungefähr 0,75 enthält.

16. Abbildungssystem nach einem der Ansprüche 13 bis 15, welches ferner einen Filter (75) enthält, welcher im Übertragungspfad von dem Emissionsstrahl (71) angeordnet ist, wobei der Filter (75) im Wesentlichen bei einer Strahlung einer Wellenlänge $\lambda_1'$ durchlässig ist und im Wesentlichen bei einer Strahlung einer Wellenlänge $\lambda_1$ undurchlässig ist.

17. Verfahren zum optischen Abtasten von einer Probe (55), welche eine fluorophore Substanz enthält, wobei das Verfahren die Schritte enthält:

Bereitstellen von einer oder mehreren Strahlungsquellen (21), welche zur Emission von einer Strahlung bei zumindest zwei unterschiedlichen Wellenlängen $\lambda_i$ geeignet sind;

Auswählen von einer der Wellenlängen, und Fokussieren der entsprechenden Strahlung als einen Anregungsstrahl (39) der Wellenlänge $\lambda_i$ auf die Probe (55) mittels einer Objektivlinse (53), so dass zumindest ein Abschnitt des Anregungsstrahls in eine Strahlung der Wellenlänge $\lambda_i'$ umgewandelt wird, wobei die umgewandelte Strahlung von der Probe (55) als eine Emissionsstrahlung (69) der Wellenlänge $\lambda_i'$ emittiert wird, und ein Abschnitt des Anregungsstrahls von der Probe (55) als eine spiegelnd reflektierte Strahlung (65) emittiert wird;

Zusammensetzen von zumindest einem Abschnitt der Emissionsstrahlung (69) der Wellenlänge $\lambda_i'$ und der spiegelnd reflektierten Strahlung (65) der Wellenlänge $\lambda_i$;

Parallelrichten der zusammengesetzten Strahlung durch die Objektivlinse (53), um einen zusammengesetzten Emissionsstrahl (71) auszubilden, und Übertragen des zusammengesetzten Emissionsstrahls (71) entlang eines Übertragungspfades an einen Spiegel (91), welcher zwischen der Strahlungsquelle (21) und der Objektivlinse (53) positioniert ist, und als ein geometrischer Strahlteiler konfiguriert ist, wobei der Spiegel (91) bei einem Winkel zum Übertragungspfad des zusammengesetzten Emissionsstrahls (71) angeordnet ist; und

Übertragen von zumindest einem Abschnitt der Emissionsstrahlung (69), welche in dem zusammengesetzten Emissionsstrahl (71) enthalten ist, an einen Erfasser (81),

wobei der Abschnitt von der Emissionsstrahlung (69) von dem Spiegel (91) in eine Richtung zum Erfasser (81) reflektiert wird, wobei die spiegelnd reflektierte Strahlung (65), welche in dem zusammengesetzten Emissionsstrahl (71) enthalten ist, in eine Richtung von dem Erfasser (81) weg durch eine Öffnung (93) in dem Spiegel (91) passiert, wobei die Öffnung (93) kleiner als die Breite des zusammengesetzten Emissionsstrahls (71) und zumindest so groß wie der Durchmesser des parallel gerichteten, spiegelnd reflektierten Lichts (65) ist, und der Anregungsstrahl (39) durch die Öffnung (93) passiert.

**Revendications**

1. Système d'imagerie (10), adapté pour être utilisé lors d'un balayage optique d'un échantillon (55), ledit système d'imagerie (10) incluant :

   A) une ou plusieurs sources de rayonnement (21) délivrant un rayonnement à au moins deux longueurs d'onde différentes $\lambda_i$ et des moyens (30) pour sélectionner une desdites longueurs d'onde $\lambda_i$ pour une transmission sous forme d'un faisceau d'excitation (39) vers l'échantillon (55),

   B) un objectif (53) disposé entre les sources de rayonnement (21) et l'échantillon (55) de sorte que ledit faisceau d'excitation (39) ayant la longueur d'onde $\lambda_i$ passe à travers l'objectif (53) et illumine l'échantillon (55), de sorte qu'une partie du faisceau d'excitation ayant une longueur d'onde $\lambda_i$ frappant l'échantillon (55) est convertie en un rayonnement d'émission (69) ayant une longueur d'onde $\lambda_i'$, et par la suite est émise sous la forme de celui-ci, et une partie (65) du faisceau d'excitation est réfléchie de manière spéculaire par l'échantillon (55), l'objectif (53) étant de plus disposé pour collimater sensiblement la lumière réfléchie de manière spéculaire (65) et les parties du rayonnement d'émission (69) frappant le côté échantillon de l'objectif (53), de manière à former un faisceau d'émission composite (71),

   C) un détecteur (81) sensible à un rayonnement ayant une longueur d'onde $\lambda_i'$, et

   D) un miroir (91) configuré sous forme d'un diviseur de faisceau géométrique disposé dans le trajet de transmission du faisceau d'excitation (39) entre les sources de rayonnement (21) et l'objectif (53),

   dans lequel le miroir (91) comporte une dimension majeure au moins aussi grande que la largeur dudit faisceau d'émission composite (71) et inclut une ouverture enfermée (93) dans le trajet de transmission dudit faisceau d'émission composite (71), la largeur de l'ouverture (93) étant plus petite que la largeur dudit faisceau d'émission composite (71) et au moins aussi grande que le diamètre de la lumière réfléchie de manière spéculaire collimatée (65), de manière à permettre au faisceau d'excitation (39) et à la lumière réfléchie de manière spéculaire collimatée (65) de passer à travers l'ouverture (93) et à réfléchir au moins une partie du rayonnement d'émission (69) dans une direction allant vers le détecteur (81).

2. Système d'imagerie selon la revendication 1, dans lequel les sources de rayonnement (21) comportent des dispositifs laser.

3. Système d'imagerie selon la revendication 2, dans lequel ledit objectif (53) comporte une ouverture numérique d'au moins 0,5.

4. Système d'imagerie selon l'une quelconque des revendications 1 à 3, dans lequel le détecteur (81) produit un signal électrique en réponse à un rayonnement incident ayant une longueur d'onde $\lambda_i'$.

**5.** Système d'imagerie selon l'une quelconque des revendications 1 à 4, comportant de plus des moyens pour balayer ledit faisceau d'excitation (39) ayant une longueur d'onde $\lambda_i$ à travers l'échantillon (55).

**6.** Système d'imagerie selon la revendication 5, dans lequel lesdits moyens de balayage comportent des moyens pour diriger de manière sélective les faisceaux d'excitation (39) produits par lesdites sources de rayonnement (21) à l'intérieur dudit système d'imagerie (10) en déplaçant un ensemble d'obturateur (30).

**7.** Système d'imagerie selon la revendication 5, dans lequel lesdits moyens de balayage comportent des moyens pour déplacer ledit objectif (53) par rapport à l'échantillon (55).

**8.** Système d'imagerie selon la revendication 5, dans lequel lesdits moyens de balayage comportent des moyens pour déplacer l'échantillon (55) par rapport audit système d'imagerie (10).

**9.** Système d'imagerie selon l'une quelconque des revendications 1 à 5, comportant de plus des moyens (30) pour bloquer de manière sélective lesdits faisceaux d'excitation (39), de sorte qu'une seule longueur d'onde d'excitation $\lambda_i$ (39) illumine l'échantillon à un instant donné.

**10.** Système d'imagerie selon la revendication 9, dans lequel lesdits moyens (30) de blocage sélectif incluent un obturateur (41, 43).

**11.** Système d'imagerie selon l'une quelconque des revendications 1 à 10, comportant de plus un filtre (75) disposé dans le trajet de transmission dudit faisceau d'émission (71), ledit filtre (75) étant sensiblement transmissif vis-à-vis d'un rayonnement ayant une longueur d'onde $\lambda_i$' et sensiblement non-transmissif vis-à-vis d'un rayonnement ayant une longueur d'onde $\lambda_i$.

**12.** Système d'imagerie selon l'une quelconque des revendications 1 à 11, dans lequel ledit détecteur (81) comporte au moins un élément du groupe constitué d'un tube photomultiplicateur, d'une photodiode à avalanche, d'un détecteur optique à solide.

**13.** Système d'imagerie selon la revendication 1, dans lequel les unes ou plusieurs sources de rayonnement (21) incluent un ou plusieurs dispositifs laser, lesdits dispositifs laser délivrant des faisceaux d'excitation (39) comportant un rayonnement ayant une longueur d'onde $\lambda_i$, $\lambda_2$, $\lambda_3$, $\lambda_4$ ... $\lambda_i$ respectivement, et dans lequel le système comporte de plus des moyens (30) pour sélectionner l'un quelconque desdits faisceaux d'excitation (39) de manière à fournir un rayonnement ayant une longueur d'onde de $\lambda_i$, $1 \leq j \leq i$.

**14.** Système d'imagerie selon la revendication 13, dans lequel ledit objectif (53) comporte une longueur focale d'approximativement 6 millimètres.

**15.** Système d'imagerie selon la revendication 13, dans lequel ledit objectif (53) comporte une ouverture numérique d'approximativement 0,75.

**16.** Système d'imagerie selon l'une quelconque des revendications 13 à 15, comportant de plus un filtre (75) disposé dans le trajet de transmission dudit faisceau d'émission (71), ledit filtre (75) étant sensiblement transmissif vis-à-vis d'un rayonnement ayant une longueur d'onde $\lambda_i$' et essentiellement non-transmissif vis-à-vis d'un rayonnement ayant une longueur d'onde $\lambda_i$.

**17.** Procédé pour balayer optiquement un échantillon (55) contenant une substance fluorescente, ledit procédé comportant les étapes consistant à :

■ agencer une ou plusieurs sources de rayonnement (21) adaptées pour émettre un rayonnement à au moins deux longueurs d'onde différentes $\lambda_i$,
■ sélectionner une desdites longueurs d'onde et focaliser le rayonnement correspondant sous forme d'un faisceau d'excitation (39) ayant une longueur d'onde $\lambda_i$ sur l'échantillon (55) par l'intermédiaire d'un objectif (53) de sorte qu'au moins une partie dudit faisceau d'excitation est convertie en un rayonnement ayant une longueur d'onde $\lambda_i$', ledit rayonnement converti étant émis par l'échantillon (55) sous forme d'un rayonnement d'émission (69) ayant une longueur d'onde $\lambda_i$', et une partie dudit faisceau d'excitation est émise par l'échantillon (55) sous forme d'un rayonnement réfléchi de manière spéculaire (65),
■ collecter au moins une partie dudit rayonnement d'émission (69) ayant une longueur d'onde $\lambda_i$' et dudit rayonnement réfléchi de manière spéculaire (65) ayant la longueur d'onde $\lambda_i$,
■ collimater ledit rayonnement collecté par ledit objectif (53) pour former un faisceau d'émission composite (71) et transmettre ledit faisceau d'émission composite (71) le long d'un trajet de transmission vers un miroir (91) positionné entre ladite source de rayonnement (21) et ledit objectif (53) et configuré sous forme d'un diviseur de faisceau géométrique, ledit miroir (91) étant disposé à un angle par rapport au trajet de transmission dudit faisceau d'émission composite (71), et
■ transmettre au moins une partie dudit rayonnement d'émission (69) inclus dans ledit faisceau d'émission composite (71) à un détecteur (81),

dans lequel ladite partie du rayonnement d'émission (69) est réfléchie par ledit miroir (91) dans une direction allant vers le détecteur (81), ledit rayonnement réfléchi de manière spéculaire (65) inclus dans ledit faisceau d'émission composite (71) passe dans une direction s'éloignant dudit détecteur (81) à travers une ouverture (93) du miroir (91), ladite ouverture (93) étant plus petite que la largeur du faisceau d'émission composite (71) et au moins aussi large que le diamètre de la lumière réfléchie de manière spéculaire collimatée (65), et ledit faisceau d'excitation (39) passe à travers ladite ouverture (93).

FIG.1

EP 1 157 268 B1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10096862 A
- US 5399866 A
- EP 1031055 A
- DE 4343076 A1
- US 5381224 A, Dixon
- US 5672880 A